# FASCICULE DE BREVET EUROPEEN

(11) **EP 0 968 879 B1**
(45) Date de publication et mention de la délivrance du brevet: **22.01.2003**
(21) Numéro de dépôt: 99401519.6
(22) Date de dépôt: 18.06.1999
(51) Int. Cl.: B60Q 1/076

(54) **Projecteur de véhicule automobile et correcteur associé**
Scheinwerfer für Kraftfahrzeuge mit zugehöriger Kontrolleinrichtung
Vehicle headlamp with correcting device

(30) Priorité: 01.07.1998 FR 9808392
(43) Date de publication de la demande: 05.01.2000
(73) Titulaire: VALEO VISION, 93012 Bobigny Cédex (FR)
(72) Inventeur: Natchoo, Philippe, 77220 Tournan en Brie (FR); Euzet, Bertrand, 95600 Eaubonne (FR)
(74) Mandataire: Lemaire, Marc

(56) Documents cités:
- DE-A- 19 607 224
- FR-A- 2 459 149
- GB-A- 2 103 779

## Description

La présente invention a trait d'une façon générale aux dispositifs de commande de l'orientation des faisceaux lumineux des projecteurs de véhicules automobiles.

On connaît déjà de tels dispositifs de commande, dont la vocation première est de donner aux faisceaux lumineux des projecteurs du véhicule une orientation en site correcte pour différentes conditions de charge du véhicule, qui lui confèrent différentes positions d'assiette. Ces dispositifs comprennent généralement un correcteur comprenant un moteur électrique, monté dans le boîtier du projecteur et relié par des câbles à un organe de commande intégré dans le tableau de bord du véhicule pour être manipulé par le conducteur du véhicule. En fonction des signaux de commande transmis par l'organe de commande, le correcteur modifie grâce au moteur électrique l'inclinaison du réflecteur du projecteur dans le boîtier, pour amener ledit réflecteur dans une position désirée.

On comprend que pour remplir efficacement sa fonction qui met en oeuvre des mouvements assez courts pour des modifications importantes de la hauteur du faisceau, la position du correcteur par rapport au réflecteur ne doit pas varier dans le temps. Or, dans le boîtier du projecteur où le correcteur est intégré, les vibrations induites par le fonctionnement du véhicule peuvent modifier la position ou l'orientation du correcteur, voire endommager celui-ci. Un problème inhérent à l'utilisation d'un correcteur est donc la tenue dans le temps du correcteur dans le boîtier du projecteur.

Pour assurer que le correcteur est convenablement fixé à l'intérieur du boîtier du projecteur et présente une bonne tenue en vibration, on encastre habituellement un joint élastique porté par une partie saillante de montage du correcteur dans une ouverture d'un élément de structure du boîtier du projecteur. Cette solution utilisant un joint permet ainsi de protéger le correcteur des vibrations lors de la marche du véhicule.

Mais un inconvénient de cette solution est qu'elle nécessite l'ajout de la pièce supplémentaire qu'est le joint, ce qui entraîne une augmentation du prix de revient du dispositif et de son temps d'assemblage.

Un but de la présente invention est de permettre d'élaborer un correcteur pouvant être monté dans un boîtier de projecteur sans joint, tout en présentant au moins des caractéristiques de tenue en vibration similaires à celles des correcteurs actuels montés avec des joints.

On connaît, par le document FR-A 2511643 un dispositif de réglage pour projecteur correspondant aux préambules des revendications 1 et 9, qui est monté sur une partie fixe solidaire du véhicule avec interposition de pattes élastiques bombées venues de matière d'une partie du dispositif de réglage.

Une telle disposition permet certes une compensation des jeux par un serrage élastique mais ne permet pas, en raison des contacts ponctuels entre le dispositif de réglage et la partie fixe solidaire du véhicule, d'assurer efficacement une insensibilité aux vibrations et une tenue convenable du dispositif de réglage au cours du temps.

La présente invention a ainsi pour but de pallier au moins en partie cet inconvénient.

Pour atteindre ces buts, l'invention propose selon un premier aspect un projecteur de véhicule automobile comprenant un réflecteur et un correcteur de la position dudit réflecteur en fonction de signaux de commande, le correcteur possédant un boîtier et une partie de montage destinée à contenir un arbre de sortie du correcteur, ledit arbre de sortie étant apte à être relié au réflecteur, la partie de montage du correcteur étant engagée dans une ouverture prévue dans une partie de structure du projecteur et entourée par une surface de montage, le correcteur comportant sur la partie de montage au moins une lèvre venue de matière et apte à être appliquée par déformation élastique autour de ladite ouverture lors du montage du correcteur, caractérisé en ce que ladite lèvre comporte au moins une surface qui est essentiellement appliquée contre la surface de montage en position de verrouillage du correcteur dans le projecteur, et en ce que le boîtier, la partie de montage et la ou les lèvres du correcteur sont réalisées d'un seul tenant.

Des aspects préférés, mais non limitatifs du projecteur selon l'invention sont les suivants:
- la partie de montage du correcteur possède des aménagements inclinés relativement à des parties coopérantes de la surface de montage entourant ladite ouverture pour solliciter élastiquement la ou lesdites lèvres lors d'une rotation du correcteur,
- lesdites parties de la surface de montage sont inclinées par rapport au plan moyen de la surface de montage,
- une limitation de rotation du correcteur est assurée conjointement par lesdites parties inclinées et par la venue en butée de la base des lèvres du correcteur sur la surface entourant l'ouverture prévue dans le boîtier du projecteur,
- il est prévu une pluralité de lèvres réparties circulairement et espacées régulièrement,
- les lèvres sont d'un profil oblique vers la surface de montage,
- l'épaisseur de chaque lèvre décroît de la partie de montage vers l'extérieur,
- les lèvres sont formées sur la partie de montage du correcteur par surmoulage.

Selon un deuxième aspect, l'invention propose un correcteur destiné à être monté dans un boîtier de projecteur de véhicule automobile pour modifier la position d'un réflecteur du projecteur en fonction de signaux de commande, qui possède un boîtier et une partie de montage destinée à contenir un arbre de sortie du correcteur, ledit arbre de sortie étant apte à être relié au réflecteur, la partie de montage du correcteur étant engagée dans une ouverture prévue dans une partie de structure du projecteur et entourée par une surface de montage, le correcteur comportant sur une partie de montage au moins une lèvre venue de matière et apte à être appliquée par déformation élastique autour d'une ouverture prévue dans une partie de structure du projecteur, lors du montage du correcteur, caractérisé en ce que ladite lèvre comporte au moins une surface qui est essentiellement appliquée contre la surface de montage en position de verrouillage du correcteur dans le projecteur, et en ce que le boîtier, la partie de montage et la ou les lèvres du correcteur sont réalisées d'un seul tenant.

Des aspects préférés, mais non limitatifs du correcteur selon l'invention sont les suivants :
- il est prévu une pluralité de lèvres réparties circulairement et espacées régulièrement,
- les lèvres sont d'un profil oblique vers la surface de montage,
- les lèvres sont formées sur la partie de montage du correcteur par surmoulage.

D'autres aspects, buts et avantages de l'invention apparaîtront mieux à la lecture de la description suivante, donnée à titre d'exemple et faite en référence aux dessins annexés, sur lesquels :
la figure 1 est une vue en perspective d'un correcteur selon l'invention,
la figure 2 est une vue schématique en coupe d'un projecteur de véhicule automobile dans lequel est monté un correcteur selon l'invention,
la figure 3a est une vue schématique en élévation d'un premier mode de réalisation de la couronne de montage d'un correcteur selon l'invention et du support de montage dans le boîtier d'un projecteur de véhicule automobile,
la figure 3b est une vue de détail d'une lèvre du correcteur selon l'invention,
la figure 3c est une vue en élévation du contour de la couronne de montage d'un correcteur selon l'invention.

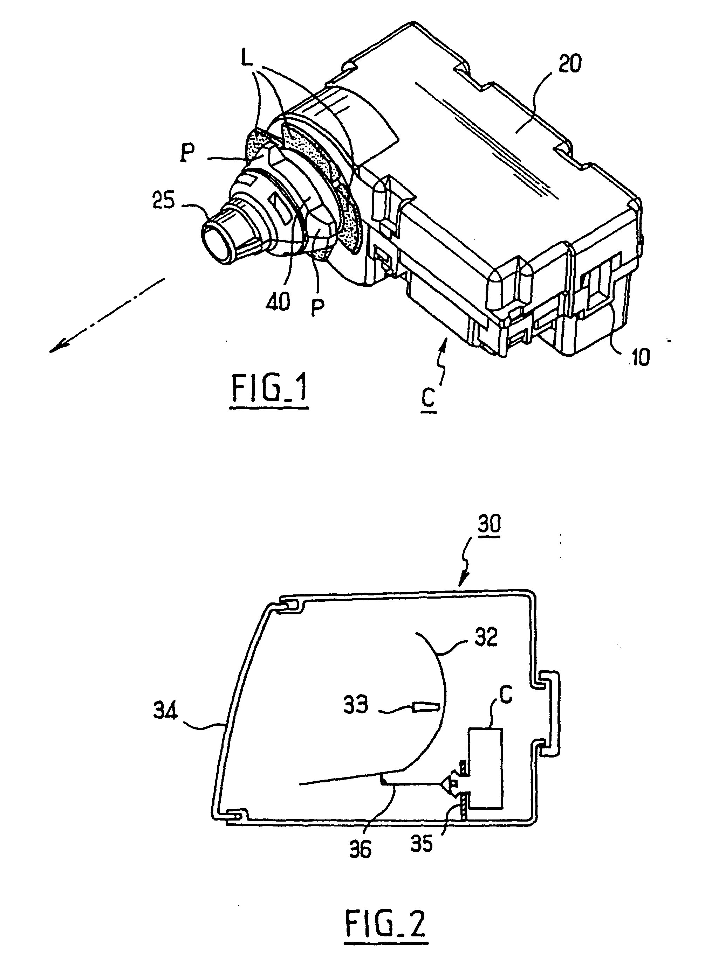

En référence à la figure 1, on a représenté un correcteur C selon l'invention, comportant un connecteur 10 et un boîtier 20. Le connecteur 10 permet de relier, via des câbles non représentés sur les figures, le correcteur à un organe de commande manuelle manipulé par le conducteur du véhicule, ou encore à un dispositif de commande automatique répondant à des capteurs d'assiette du véhicule.

Le boîtier 20 renferme un moteur électrique actionné par les signaux de commande transmis par les câbles, et possède une partie de support axial, ou canon, 25 destinée à contenir l'arbre de sortie (non représenté sur la figure) du correcteur. L'extrémité de l'arbre de sortie du correcteur est apte à être reliée à un réflecteur, de façon connue en soi, pour modifier l'orientation de son faisceau.

Un exemple d'implantation d'un correcteur C selon l'invention dans un projecteur 30 est représenté sur la figure 2. Le correcteur est monté dans une ouverture formée dans une membrure 35 intérieure du projecteur, et son arbre de sortie est apte à modifier l'orientation du réflecteur 32 dans lequel est montée une lampe 33. Sur la figure 2, la liaison entre le correcteur et le réflecteur est symbolisée par la ligne 36. Comme on l'a dit, une telle liaison permettant de modifier l'inclinaison du réflecteur autour d'un axe horizontal, grâce à des mouvements de l'arbre de sortie du correcteur, est connue en soi et ne sera donc pas décrite plus en détail dans le présent texte.

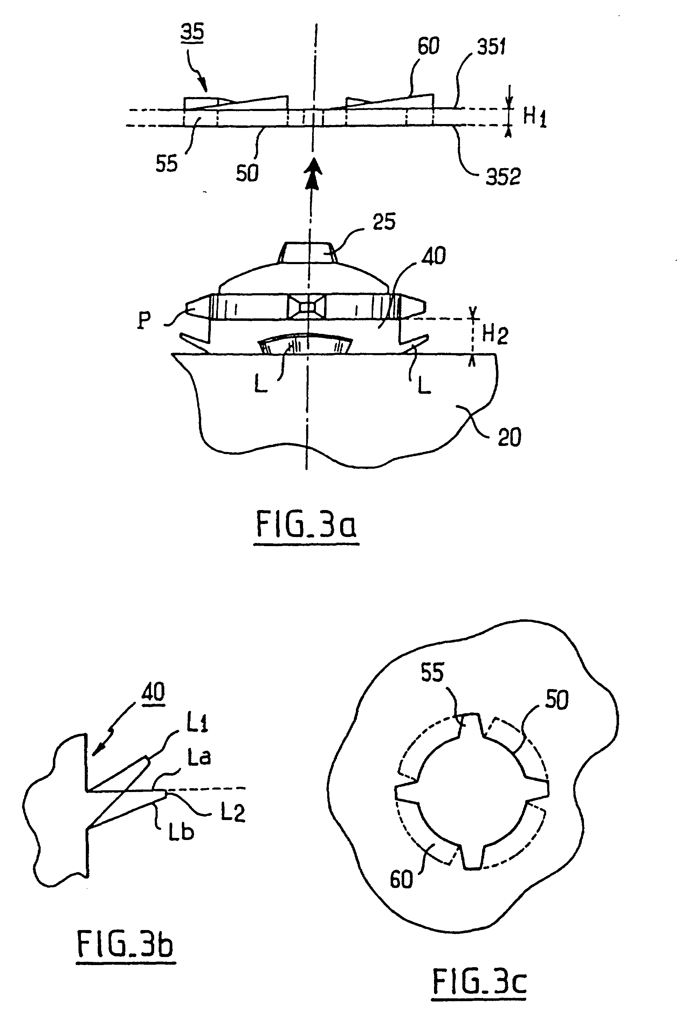

En référence maintenant à la figure 3a, le correcteur comprend à la base du canon 25 une couronne 40 comportant sur sa partie adjacente au boîtier 20 quatre lèvres L venues de matière. Ces lèvres sont reliées par leur base à la couronne et sont aptes à se déformer élastiquement, sous l'effet d'une contrainte parallèle à l'axe du canon 25, entre une position de repos L1, et une position comprimée L2 comme indiqué sur la figure 3b. La figure 3b représente également la géométrie particulière du profil des lèvres L, dont l'épaisseur décroît à partir de la couronne 40, et qui comportent deux faces opposées convergentes La et Lb.

La couronne 40 porte également sur sa circonférence quatre pattes P venues de matière et placées de manière à ce que les lèvres L se trouvent entre le boîtier 20 et les pattes P. L'ensemble formé par la couronne 40, les lèvres L et les pattes P est réalisé par moulage d'une matière plastique d'un seul tenant avec le boîtier 20 du correcteur.

La couronne du correcteur munie de ses pattes permet de monter le correcteur dans une ouverture 50 d'un élément de structure interne du projecteur correspondant à la membrure 35 de la figure 2, le contour de ladite ouverture étant représenté sur la figure 3c et possédant des échancrures 55 pour correspondre au contour de la couronne 40 au niveau des pattes P.

Pour monter le correcteur dans le boîtier du projecteur, un opérateur engage la couronne 40 et les pattes P dans l'ouverture 50 de l'élément de structure S, en plaçant les pattes en regard des échancrures 55 comme indiqué sur la figure 3a. Une fois que les pattes ont traversé l'ouverture 50, l'opérateur fait tourner le correcteur dans le sens trigonométrique par rapport à l'élément 35, afin que les pattes P coopèrent avec les rampes 60 portées par-la face 351 de l'élément 35 opposée au correcteur selon un mouvement hélicoïdal, pour rapprocher le boîtier 20 du correcteur de l'élément 35. Pour rendre cette rotation possible, l'épaisseur H1 de l'élément 35 est inférieure à la largeur H2 de la gorge définie par les pattes P sur la couronne 40.

Lors de ce mouvement hélicoïdal de montage du correcteur, les lèvres L viennent en contact avec la face 352 de l'élément 35 et se déforment élastiquement jusqu'à atteindre la position L2 qui constitue la limite de déformation de la lèvre et par conséquent la limite de la rotation du correcteur C.

Il apparaît ainsi que les coopérations respectives des pattes P avec les rampes 60, et des lèvres L avec la face 352 de l'élément 35 permettent d'assurer un montage du correcteur sur l'élément 35 de telle sorte que la position du correcteur le boîtier de projecteur soit stable.

Les géométries des lèvres L, des faces des pattes P et des rampes 60 sont choisies de manière à ce qu'une rotation de l'ordre de 45° suffise pour plaquer convenablement les lèvres L contre l'élément de support, et pour assurer un montage stable du correcteur sur l'élément 35.

Dans un autre mode de réalisation non représenté sur les figures, la face 351 de l'élément de structure interne du projecteur est plane et ne comprend pas de rampes et les faces des pattes P faisant face aux lèvres L sont inclinées, pour coopérer comme dans le dispositif de la figure 3a.

Une fois le correcteur monté sur l'élément de support, les lèvres L comprimées dans la position L2 exercent sur ledit élément de support un effort élastique de façon à garantir la stabilité de la position du correcteur, en particulier en absorbant les vibrations dues à la marche du véhicule et en éliminant ainsi l'essentiel des chocs provoqués par ces vibrations, et des jeux qui pourraient en résulter.

L'opération de montage décrite ci-dessus est réversible. Pour désolidariser le correcteur du boîtier, l'opérateur fait tourner ledit correcteur dans le sens horaire par rapport à l'élément de structure jusqu'à amener les pattes P en regard des échancrures 55, et dégage le correcteur de l'ouverture 50 par une translation selon l'axe du canon 25.

Les lèvres L peuvent être moulées d'une pièce avec la couronne ou avec le corps principal du correcteur. Elles peuvent également être surmoulées sur la couronne ou sur le corps principal du correcteur.

Il apparaît donc que le correcteur selon l'invention est avantageux en ce qu'il ne nécessite pas de joint pour l'amortissement des vibrations dans un boîtier de projecteur, ce qui permet de réduire le nombre de composants utilisés, le prix de revient du dispositif et la durée nécessaire à l'assemblage de ce dispositif, tout en assurant une excellente stabilité du montage.

## Revendications

1. Projecteur (30) de véhicule automobile comprenant un réflecteur (32) et un correcteur (C) de la position dudit réflecteur en fonction de signaux de commande, le correcteur possédant un boîtier (20) et une partie de montage (40, 25) destinée à contenir un arbre de sortie du correcteur, ledit arbre de sortie étant apte à être relié au réflecteur, la partie de montage du correcteur étant engagée dans une ouverture (50) prévue dans une partie de structure (35) du projecteur et entourée par une surface de montage (352), le correcteur comportant sur la partie de montage au moins une lèvre (L) venue de matière et apte à être appliquée par déformation élastique autour de ladite ouverture (50) lors du montage du correcteur, **caractérisé en ce que** ladite lèvre (L) comporte au moins une surface qui est essentiellement appliquée contre la surface de montage (352) en position de verrouillage du correcteur dans le projecteur, et **en ce que** le boîtier (20), la partie de montage (40, 25) et la ou les lèvres (20)du correcteur sont réalisés d'un seul tenant.

2. Projecteur selon la revendication 1, **caractérisé en ce que** la partie de montage du correcteur possède des aménagements (P) inclinés relativement à des parties coopérantes (60) de la surface (351 ) de montage entourant ladite ouverture (50) pour solliciter élastiquement la ou lesdites lèvres (L) lors d'une rotation du correcteur.

3. Projecteur selon la revendication 2, **caractérisé en ce que** lesdites parties (60) de la surface de montage sont inclinées par rapport au plan moyen de la surface de montage.

4. Projecteur selon la revendication 3, **caractérisé en ce qu'**une limitation de rotation du correcteur est assurée conjointement par lesdites parties inclinées (60) et par la venue en butée de la base des lèvres (L) du correcteur sur la surface entourant l'ouverture (50) prévue dans le boîtier du projecteur.

5. Projecteur selon l'une des revendications précédentes, **caractérisé en ce qu'**il est prévu une pluralité de lèvres (L) réparties circulairement et espacées régulièrement.

6. Projecteur selon l'une quelconque des revendications précédentes, **caractérisé en ce que** les lèvres (L) sont d'un profil oblique vers la surface de montage (351).

7. Projecteur selon l'une quelconque des revendications précédentes, **caractérisé en ce que** l'épaisseur de chaque lèvre décroît de la partie de montage (40) vers l'extérieur

8. Projecteur selon l'une quelconque des revendications 1 à 7, **caractérisé en ce que** les lèvres sont formées sur la partie de montage du correcteur par surmoulage.

9. Correcteur (C) destiné à être monté dans un boîtier de projecteur de véhicule automobile pour modifier la position d'un réflecteur du projecteur en fonction de signaux de commande, qui possède un boîtier (20) et une partie de motage (40, 25) destinée à contenir un arbre de sortie du correcteur (C), ledit arbre de sortie étant apte à être relié au réflecteur, la partie de montage du correcteur étant engagée dans une ouverture (50) prévue dans une partie de structure (35) du projecteur et entourée par une surface de montage (352), le correcteur comportant sur une partie de montage (40) au moins une lèvre (L) venue de matière et apte à être appliquée par déformation élastique autour d'une ouverture (50) prévue dans une partie de structure (35) du projecteur, lors du montage du correcteur, **caractérisé en ce que** ladite lèvre (L) comporte au moins une surface qui est essentiellement appliquée contre la surface de montage (352) en position de verrouillage du correcteur dans le projecteur, et **en ce que** le boîtier (20), la partie de montage (40, 25) et la ou les lèvres (20)du correcteur sont réalisés d'un seul tenant.

10. Correcteur selon la revendication 9, **caractérisé en ce qu'**il est prévu une pluralité de lèvres réparties circulairement et espacées régulièrement.

11. Correcteur selon la revendication 9 ou 10, **caractérisé en ce que** les lèvres (L) sont d'un profil oblique vers la surface de montage (351).

12. Correcteur selon l'une quelconque des revendications 9 à 11, **caractérisé en ce que** les lèvres sont formées sur la partie de montage du correcteur par surmoulage.

## Patentansprüche

1. Kraftfahrzeugscheinwerfer (30) mit einem Reflektor (32) und einem Steller (C) zum Einstellen der Position des Reflektors in Abhängigkeit von Steuersignalen, wobei der Steller ein Gehäuse (20) und ein Montageteil (40, 25) aufweist, das dazu bestimmt ist, eine Abtriebswelle des Stellers zu enthalten, die mit dem Reflektor verbunden zu werden vermag, wobei das Montageteil des Stellers in eine Öffnung (50) eingeführt ist, die in einem Teil der Struktur (35) des Scheinwerfers vorgesehen und von einer Montagefläche (352) umgeben ist, wobei der Steller auf dem Montageteil wenigstens eine angeformte Lippe (L) aufweist, die bei der Montage des Stellers in elastischer Verformung um die Öffnung (50) gedrückt zu werden vermag,
**dadurch gekennzeichnet, dass** die Lippe (L) wenigstens eine Fläche aufweist, die in der verriegelten Stellung des Stellers im Scheinwerfer im Wesentlichen gegen die Montagefläche (352) gedrückt wird, und dass das Gehäuse (20), das Montageteil (40, 25) und die Lippe bzw. Lippen (20) des Stellers in einem Stück ausgeführt sind.

2. Scheinwerfer nach Anspruch 1,
**dadurch gekennzeichnet, dass** das Montageteil des Stellers über Einrichtungen (P) verfügt, die in Bezug auf zusammenwirkende Teile (60) der die Öffnung (50) umgebenden Montagefläche (351) geneigt sind, um die Lippe bzw. Lippen (L) bei einer Drehung des Stellers elastisch zu drängen.

3. Scheinwerfer nach Anspruch 2,
**dadurch gekennzeichnet, dass** die Teile (60) der Montagefläche in Bezug auf die Mittelebene der Montagefläche geneigt sind.

4. Scheinwerfer nach Anspruch 3,
**dadurch gekennzeichnet, dass** eine Begrenzung der Drehung des Stellers gemeinsam durch die geneigten Teile (60) und durch das Anschlagen der Basis der Lippen (L) des Stellers an der Fläche gewährleistet ist, die die im Gehäuse des Scheinwerfers vorgesehene Öffnung (50) umgibt.

5. Scheinwerfer nach einem der vorhergehenden Ansprüche,
**dadurch gekennzeichnet, dass** eine Vielzahl von kreisförmig verteilten und gleichmäßig beabstandeten Lippen (L) vorgesehen ist.

6. Scheinwerfer nach einem der vorhergehenden Ansprüche,
**dadurch gekennzeichnet, dass** die Lippen (L) ein zur Montagefläche (351) schräges Profil haben.

7. Scheinwerfer nach einem der vorhergehenden Ansprüche,
**dadurch gekennzeichnet, dass** die Dicke jeder Lippe vom Montageteil (40) nach außen abnimmt.

8. Scheinwerfer nach einem der vorhergehenden Ansprüche 1 bis 7,
**dadurch gekennzeichnet, dass** die Lippen auf dem Montageteil des Stellers durch Aufspritzen gebildet sind.

9. Steller (C), der dazu bestimmt ist, in einem Scheinwerfergehäuse für Kraftfahrzeuge montiert zu werden, um die Stellung eines Scheinwerferreflektors in Abhängigkeit von Steuersignalen zu verändern, und der ein Gehäuse (20) und ein Montageteil (40, 25) besitzt, das dazu bestimmt ist, eine Abtriebswelle des Stellers (C) zu enthalten, die mit dem Reflektor verbunden zu werden vermag, wobei das Montageteil des Stellers in eine Öffnung (50) eingeführt ist, die in einem Teil der Struktur (35) des Scheinwerfers vorgesehen und von einer Montagefläche (352) umgeben ist, wobei der Steller auf einem Montageteil (40) wenigstens eine angeformte Lippe (L) aufweist, die bei der Montage des Stellers in elastischer Verformung um eine Öffnung (50) gedrückt zu werden vermag, die in einem Teil der Struktur (35) des Scheinwerfers vorgesehen ist,
**dadurch gekennzeichnet, dass** die Lippe (L) wenigstens eine Fläche aufweist die in der verriegelten Stellung des Stellers im Scheinwerfer im Wesentlichen gegen die Montagefläche (352) gedrückt wird, und dass das Gehäuse (20), das Montageteil (40, 25) und die Lippe bzw. Lippen (20) des Stellers in einem Stück ausgeführt sind.

10. Steller nach Anspruch 9,
**dadurch gekennzeichnet, dass** eine Vielzahl von kreisförmig verteilten und gleichmäßig beabstandeten Lippen vorgesehen ist.

11. Steller nach Anspruch 9 oder 10,
**dadurch gekennzeichnet, dass** die Lippen (L) ein zur Montagefläche (351) schräges Profil haben.

12. Steller nach einem der Ansprüche 9 bis 10,
**dadurch gekennzeichnet, dass** die Lippen auf dem Montageteil des Stellers durch Aufspritzen gebildet sind.

## Claims

1. A motor vehicle headlight comprising a reflector (32) and a corrector (C) for correcting the position of the said reflector in response to control signals, the corrector having a casing (20) and a mounting part (40, 25) adapted to contain an output shaft of the corrector, the said output shaft being adapted to be connected to the reflector, the mounting part of the reflector being engaged in an aperture (50) disposed in a structural part (35) of the headlight and being surrounded by a mounting surface (352), the corrector including, on the mounting part, at least one integral lever (L) which is adapted to be applied by elastic deformation around the said aperture (50) during mounting of the corrector, **characterised in that** the said lever (L) has at least one surface which is essentially applied against the mounting surface (352) in a position for locking the corrector in the headlight, and **in that** the casing (20), the mounting part (40, 25), and the lever or levers (20) of the corrector are formed in one piece.

2. A headlight according to Claim 1, **characterised in that** the mounting part of the corrector has elements (P) which are inclined in relation to co-operating portions (60) of the mounting surface (351) surrounding the said aperture (50), whereby to bias the said lever or levers (L) elastically during a rotating movement of the corrector.

3. A headlight according to Claim 2, **characterised in that** the said portions (60) of the mounting surface are inclined with respect to the mean plane of the mounting surface.

4. A headlight according to Claim 3, **characterised in that** rotation of the corrector is limited by, in combination, the said inclined portions (60) and by the base of the levers (L) of the corrector coming into abutment on the surface surrounding the aperture (50) formed in the casing of the headlight.

5. A headlight according to one of the preceding Claims, **characterised in that** a plurality of levers (L) are provided, these being spaced part at regular intervals on a pitch circle.

6. A headlight according to any one of the preceding Claims, **characterised in that** the levers (L) have a profile which is oblique towards the mounting surface (351).

7. A headlight according to any one of the preceding Claims, **characterised in that** the thickness of each lever decreases outwardly from the mounting part (40).

8. A headlight according to any one of Claims 1 to 7, **characterised in that** the levers are formed by being moulded over the mounting part of the corrector.

9. A corrector (C) which is adapted to be mounted in a motor vehicle headlight casing, for modifying the position of a reflector of the headlight in response to control signals, and which has a casing (20) and a mounting part (40, 25) adapted to contain an output shaft of the corrector, the said output shaft being adapted to be connected to the reflector, the mounting part of the reflector being engaged in an aperture (50) disposed in a structural part (35) of the headlight and being surrounded by a mounting surface (352), the corrector including, on the mounting part, at least one integral lever (L) which is adapted to be applied by elastic deformation around an aperture (50), disposed in a structural part (35) of the headlight, during mounting of the corrector, **characterised in that** the said lever (L). has at least one surface which is essentially applied against the mounting surface (352) in a position for locking the corrector in the headlight, and **in that** the casing (20), the mounting part (40, 25), and the lever or levers (20) of the corrector are formed in one piece.

10. A corrector according to Claim 9, **characterised in that** a plurality of levers (L) are provided, these being spaced part at regular intervals on a pitch circle.

11. A corrector according to Claim 9 or Claim 10, **characterised in that** the levers (L) have a profile which is oblique towards the mounting surface (351).

12. A corrector according to any one of Claims 9 to 11, **characterised in that** the levers are formed by being moulded over the mounting part of the corrector.
